Europäisches Patentamt

European Patent Office

Office européen des brevets

(19)

(11) Veröffentlichungsnummer: **0 226 731**
**B1**

(12) **EUROPÄISCHE PATENTSCHRIFT**

(45) Veröffentlichungstag der Patentschrifft:
07.02.90

(51) Int. Cl.⁵: **F 23 J 15/00, B 01 D 53/34**

(21) Anmeldenummer: 86113741.2

(22) Anmeldetag: 03.10.86

(54) Vorrichtung zum Vermindern der Schadstoffemissionen in Rauchgasen von Feuerungsanlagen.

(30) Priorität: 22.10.85 DE 3537478

(43) Veröffentlichungstag der Anmeldung:
01.07.87 Patentblatt 87/27

(45) Bekanntmachung des Hinweises auf die Patenterteilung:
07.02.90 Patentblatt 90/06

(84) Bennante Vertragsstaaten:
DE ES GB NL

(56) Entgegenhaltungen:
EP-A-0 102 473
WO-A-85/02129
DE-A-3 238 941
FR-A-1 451 038
FR-A-2 252 544
US-A-2 429 880
US-A-4 114 680

(73) Patentinhaber: **Apparatebau Rothemühle Brandt & Kritzler Gesellschaft mit beschränkter Haftung**
**Wildenburger Strasse 1**
**D-5963 Wenden 5 - Rothemühle (DE)**

(72) Erfinder: **Kraft, Erich, Dipl.-Ing.**
**Dorfstrasse 32**
**D-5241 Niederfischbach (DE)**
Erfinder: **Raths, Hans-Günther**
**Düringer Strasse 85**
**D-5960 Olpe/Biggesee (DE)**
Erfinder: **Schlüter, Siegfried, Dipl.-Ing.**
**Heerweg 9**
**D-5963 Wenden 5 (DE)**

(74) Vertreter: **Müller, Gerd**
**Patentanwälte HEMMERICH-MÜLLER-GROSSE-**
**POLLMEIER-MEY Hammerstrasse 2**
**D-5900 Siegen 1 (DE)**

**Beschreibung**

Die Erfindung befaßt sich mit der Rauchgasreinigung in Feuerungsanlagen, also mit Sekundärmaßnahmen, die bei Feuerungsanlagen herkömmlicher Bauweise zur Minderung der $SO_2$- und $NO_x$-Emissionen beitragen.

Gegenstand der Erfindung ist dabei eine Vorrichtung zur Schadgasminderung beim Betrieb von Feuerungsanlagen, bspw. zur Dampferzeugung, die nicht nur der Entfernung von $SO_2$, sondern auch von $NO_x$ aus Rauchgasen dienlich ist.

Eine solche Vorrichtung zur Schadgasminderung beim Betrieb von Feuerungsanlagen besteht aus naß und/oder trocken arbeitenden Reaktoren und diesen zugeordneten RegenerativWärmetauschern, wobei die Regenerativ-Wärmetauscher entweder der Abkühlung und Wiederaufwärmung oder aber der Vorwärmung und Wiederabkühlung des Rauchgasstromes dienen.

Es gelangen dabei sogenannte Mehrstrom-Regenerativ-Wärmetauscher der z. B. aus Fig. 2 der DE-A-3 238 941 bekanntgewordenen Bauart zum Einsatz, wie sie zur getrennten Aufwärmung zweier Medienströme dienen und bei denen zu diesem Zweck die Speichermassen derart konzentrisch unterteilt sind, daß die wärmeübertragenden sowie auch die wärmeaufnehmenden Medien jeweils in zwei getrennten, parallelen Strömen durch die Speichermassen hindurchgeführt werden können. Es werden also in Vorrichtungen zur Schadgasminderung beim Betrieb von Feuerungsanlagen Regenerativ-Wärmetauscher eingesetzt, wie sie entwickelt wurden, um eine getrennte Regelbarkeit der Primär- und Sekundärluft-Temperaturen und -Mengen zu erzielen.

Bei dieser Bauart von Regenerativ-Wärmetauschern wird die regelbare Aufwärmung der Primär- und Sekundärluft dadurch erreicht, daß die beiden Luftströme konzentrisch zueinander durch getrennte Räume der Speichermassen geführt und ihre Temperaturen und Drücke unabhängig voneinander geregelt werden.

Wie dem Aufsatz "Rauchgasreinigung in Großfeuerungsanlagen" von H. Jüntgen und E. Richter, Essen, auf den Seiten 8 bis 20 der "Dokumentation Rauchgasreinigung", VDI-Verlag, zu entnehmen ist, besteht hierbei nicht nur die Notwendigkeit, Schwefeloxide aus den Rauchgasen zu entfernen, sondern vielmehr auch die Erfordernis, eine Reduktion von Stickoxiden herbeizuführen.

Während zur Entfernung von $SO_2$ aus den Rauchgasen von Feuerungsanlagen entweder Waschverfahren bspw. mit dem Endprodukt Gips, oder aber das sogenannte Sprühabsorptions-Verfahren eingesetzt werden, findet bisher zur $NO_x$-Entfernung aus den Rauchgasen von Feuerungsanlagen die katalytische Reduktion mit $NH_3$ Anwendung, wobei sogenannte SCR-Reaktoren zum Einsatz gelangen.

Diese SCR-Reaktoren werden dabei in Feuerungsanlagen von Dampferzeugern einerseits zwischen dem Economizer und dem Luftvorwärmer, also vor der Rauchgasentschwefelung bzw. $SO_2$-Entfernung installiert, oder aber hinter der Rauchgasentschwefelung bzw. $SO_2$-Entfernung, also vor dem Kamin, eingebaut.

Bei der naß arbeitenden Entschwefelung wird das Rauchgas als Rohgas vor der Wäsche abgekühlt und danach als Reingas wieder aufgewärmt.

Bei der Stickoxidminderung (hinter der Rauchgasentschwefelung angeordnet) ist es notwendig, das Rauchgas vor dem SCR-Reaktor aufzuwärmen und danach wieder vor Eintritt in den Kamin abzukühlen.

Zu diesem Zweck gelangen Regenerativ-Wärmetauscher zum Einsatz. Solche Regenerativ-Wärmetauscher sind dabei einerseits durch Verstopfung ihrer Wärmespeichermassen mit Ablagerungen gefährdet, die bei Anordnung mit der Rauchgasentschwefelung aus Kalkverbindungen und Flugstaub bestehen, während sie bei Anordnung mit dem SCR-Reaktor zusätzlich Ammoniumbisulfat, also $NH_4HSO_4$ enthalten.

Nachteilig wirken sich bei der Rauchgasentschwefelung auch Temperaturänderungen aus, die bei Teillastbetrieb der Feuerungsanlage auftreten, weil durch das Absenken der Rohgas-Eintrittstemperatur im Wäscher der Wasserhaushalt nachteilig beeinflußt wird.

Zur Vermeidung dieser Nachteile ist bspw. aus der US-A-2 429 880 bekannt, in Vorrichtungen zur Schadgasminderung beim Betrieb von Feuerungsanlagen jeweils vier getrennt voneinander arbeitende Regenerativ-Wärmetauscher vorzusehen. Die Betriebsweise der mit vier Regenerativ-Wärmetauschern ausgestatteten Feuerung ist so, daß immer zwei einander unmittelbar benachbarte Wärmetauscher mit den Feuerungsabgasen beaufschlagt werden, während gleichzeitig nur einer dieser Wärmetauscher eine Kaltluftbeaufschlagung erhält, um dadurch die Verbrennungsluft für die Feuerung aufzuheizen. Der Gesamtaufbau der Anlage ist von solcher Art, daß mit der Umschaltung der jeweils paarweise an voneinander abgewendeten Enden der Feuerung angeordneten Regenerativ-Wärmetauschern zugleich auch der Brennerbetrieb in der Feuerung gewechselt werden muß.

Aufgabe der Erfindung ist es, eine Beaufschlagung der Speichermassen in stetigem Wechsel einerseits mit beiden parallelen Strömen des wärmeübertragenden Mediums und andererseits mit beiden parallelen Strömen des wärmeaufnehmenden Mediums zu ermöglichen und dafür zu sorgen, daß sich dabei auch jeder einzelne Medienstrom unabhängig von allen übrigen Medienströmen beeinflussen läßt.

Basierend auf einer gattungsgemäßen Vorrichtung zur Schadgasminderung beim Betrieb von Feuerungsanlagen, die mit naß und/oder trocken arbeitenden Reaktoren und diesen zugeordneten Regenerativ-Wärmetauschern ausgestattet ist, welche entweder der Abkühlung und Wiederaufwärmung, oder aber der Vorwärmung und Wiederabkühlung des Rauchgasstromes dienen und bei denen die Speichermassen des Regenerativ-Wärmetauschers konzentrisch in mindestens zwei Speichermassen-Bereiche unterteilt sind, damit die wärmeübertragenden sowie auch die wärmeaufnehmenden Medien jeweils in zwei getrennten, parallelen Strömen durch diese Speichermassen hindurchgeführt werden können, und wobei weiterhin entweder die Speichermassen stationär angeordnet sind und zwischen umlaufbeweglichen Medien-Z-und Abführhauben und mit diesen verbundenen Medien-Zu-und Ablaufkanälen liegen oder die Speichermassen drehbeweglich zwischen stationären Medien-Zu-und Abführhauben mit entsprechenden Medien-Zu-und Ablaufkanälen angeordnet sind, wird die Lösung dieser Aufgabe nach dem Kennzeichen des Anspruchs 1 erfindungsgemäß dadurch erreicht, daß jeder der beiden parallelen Ströme sowohl des wärmeübertragenden Mediums als auch des wärmeaufnehmenden Mediums für sich allein wahlweise entweder dem zugeordneten Teil der Speichermassen zuführbar oder gegen den zugeordneten Teil der Speichermassen absperrbar ist.

In vorteilhafter Weise kann dabei die Unterteilung der Heizflächen bzw. Speichermasse so erfolgen, daß für jeden der beiden parallelen Ströme des wärmeübertragenden Mediums und des wärmeaufnehmenden Mediums die halbe Kapazität derselben zur Verfügung steht, so daß während der vollständigen Absperrung und Waschung des einen Bereichs am Regenerativ-Wärmetauscher im anderen Bereich desselben noch ein Betrieb mit 60 bis 65 % der Nennlast ermöglicht wird. Die Auslegung der erfindungsgemäßen Vorrichtung kann so gewählt werden, daß nach Anspruch 2 jeweils lediglich der gegen Medienzufuhr abgesperrte Teil der Speichermassen einem nassen oder thermischen Reinigungsvorgang unterwerfbar ist.

Die nasse Reinigung erfolgt in der Form, daß der entsprechende Bereich zunächst vom heißen Medium der Abkühlung getrennt und dann nach zusätzlicher Absperrung vom kalten Medium mit Wasser gewaschen wird. Anschließend wird durch Öffnen der entsprechenden Absperrklappen dieser Bereich wieder auf Betriebstemperatur hochgefahren.

Die thermische Reinigung erfolgt dadurch, daß die Speichermassen gegenüber ihrem normalen Betriebszustand überhitzt bzw. unterkühlt werden. Hierdurch tritt in beiden Fällen eine Änderung des Aggregatzustandes des bspw. als Ammoniumbisulfat ($NH_4$ $HSO_4$) vorliegenden Belages ein, so daß sich demzufolge die Heizflächen gut reinigen lassen. Nach dem Reinigungsvorgang werden die Speichermassen wieder voll mit den wärmeaustauschenden Medien beaufschlagt und im Normalbetrieb weitergefahren.

Durch Drosselung eines Teilstromes des wärmeübertragenden Mediums und/oder des wärmeaufnehmenden Mediums kann mit der erfindungsgemäßen Vorrichtung bei Teillastbetrieb der Feuerungsanlage auch eine Nennwert-Regelung der Gastemperatur herbeigeführt werden.

Nach einer weiterbildenden Ausgestaltung der erfindungsgemäßen Vorrichtung hat es sich auch bewährt, wenn gemäß Anspruch 3 die Ströme sowohl des wärmeübertragenden Mediums als auch des wärmeaufnehmenden Mediums wenigstens jeweils an einer Seite des Regenerativ-Wärmetauschers auch außerhalb der Speichermassen getrennt parallel geführt werden, weil erst hierdurch eine optimale Durchsatzregelung der Medien durch die Speichermassen des Regenerativ-Wärmetauschers erreicht werden kann.

Sämtliche außerhalb der Speichermassen befindlichen Stromtrennungen für beide Medien sind erfindungsgemäß nach Anspruch 4 an der gleichen Seite des Wärmetauschers angeordnet und ermöglichen dadurch die Erstellung der Vorrichtung mit einem relativ geringen Bauaufwand.

Nach Anspruch 5 ist im Rahmen der Erfindung vorgesehen, daß die Stromtrennungen aus Kanälen und/oder Hauben bestehen, in denen jeweils mit Abstand von der Speichermasse Drossel- und/oder Absperrklappen sitzen, die jeweils unabhängig voneinander betätigbar sind. Wenn in jedem der Kanäle und/oder in jeder der Hauben eine größere Anzahl von Drossel- und/oder Absperrklappen vorgesehen ist, die einzeln und unabhängig voneinander betätigt werden können, ist eine optimale Regelung der Gastemperaturen auf Nennwerte innerhalb jedes Teilbereichs der Speichermassen des Regenerativ-Wärmetauschers möglich.

Die Wirksamkeit einer erfindungsgemäßen Vorrichtung kann auch dadurch gesteigert werden, daß gemäß Anspruch 6 die Reinigungsvorrichtungen der oberen Seite der Speichermassen im vertikal angeordneten Regenerativ-Wärmetauscher zugeordnet sind.

Für den Betrieb der erfindungsgemäßen Vorrichtung hat es sich auch bewährt, wenn gemäß Anspruch 7 die Stromtrennungen für die Medienströme der Seite des Regenerativ-Wärmetauschers zugeordnet sind, die nicht durch Korrosionen oder hohe Temperaturen belastet sind.

Für die Drossel und/oder Absperrklappen erweist es sich als vorteilhaft, wenn sie erfindungsgemäß nach Anspruch 8 in den Strömungswegen für das eine Medium stromaufwärts vom Regenerativ-Wärmetauscher angeordnet sind, während sie in den Strömungswegen für das andere Medium stromabwärts des Regenerativ-Wärmetauschers liegen.

Vorteilhaft ist es beim Betrieb einer erfindungsgemäßen Vorrichtung zur Schadgasminderung in Feuerungsanlagen, daß bei jedem Lastfall ein symmetrisches Temperaturprofil erreicht werden kann, welches dann von großer Bedeutung ist, wenn der SCR-Reaktor sich in der Gasreinigungsanlage hinter dem Regenerativ-Wärmetauscher befindet.

Das rotationssymmetrische Temperaturprofil in den Speichermassen des Regenerativ-Wärmetauschers erlaubt aber auch eine leichte Einstellung des Dichtsystems.

Die volle Beaufschlagung des während eines Reinigungsvorgangs noch aktiven Teilbereichs des Regenerativ-Wärmetauschers hat darüber hinaus den Vorteil, daß sich hierin auch ein guter Selbstreinigungseffekt einstellt.

Weitere Merkmale und Vorteile des Gegenstandes der Erfindung werden nachfolgend anhand der Zeichnung ausführlich erläutert. Dabei zeigen

Figur 1 im Axialschnitt den erfindungswesentlichen Teil einer Vorrichtung zur Schadgasminderung beim Betrieb von Grossfeuerungsanlagen, während in den

Fig. 2 und 3 in schematischer Darstellung zwei verschiedene Bauarten von Großfeuerungsanlagen zu sehen sind, die eine erfindungsgemäße Vorrichtung zur Schadgasminderung enthalten.

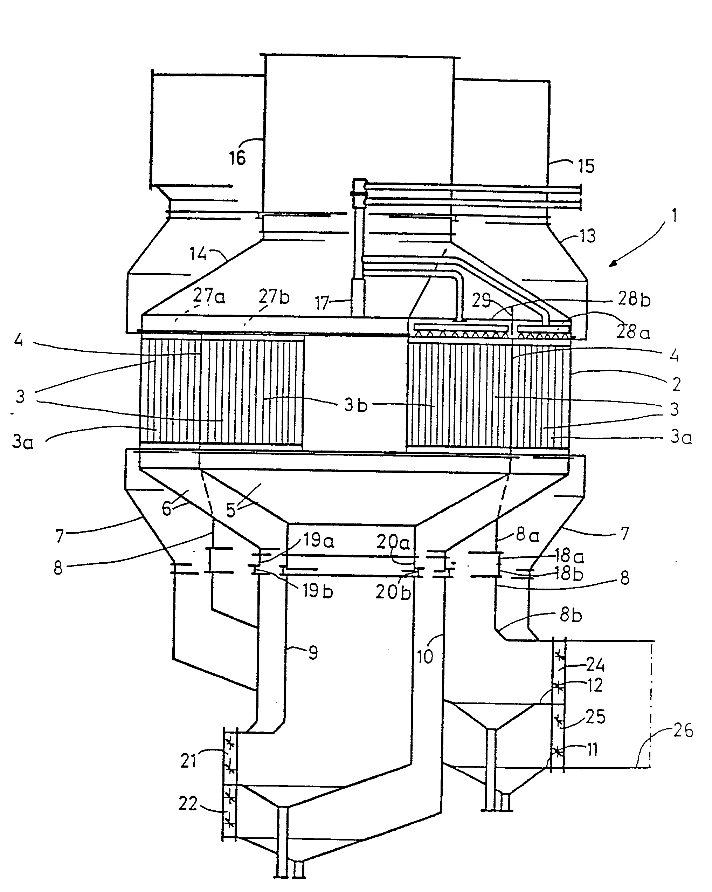

In Fig. 1 der Zeichnung ist der Aufbau eines sogenannten Mehrstrom-Regenerativ-Wärmetauschers 1 gezeigt, der in einem stationären Gehäuse 2 die Speichermassen 3 mit ihren Heizflächen in vertikaler Anordnung enthält.

Innerhalb des Gehäuses 2 sind dabei die Speichermassen des Regenerativ-Wärmetauschers durch eine eingebaute Trennwand 4 konzentrisch in zwei Speichermassen-Bereiche 3a und 3b unterteilt, von denen jede 50 % der Heizflächen umfaßt.

Ein äußerer Ringbereich der Speichermassen 3 enthält dabei den Speichermassen-Bereich 3a, während ein innerer Ringbereich derselben den Speichermassen-Bereich 3b enthält.

An das eine, beispielsweise das untere Ende des stationären Gehäuses 2 schließen sich zwei Medien-Zuführhauben 5 und 6 sowie auch zwei Medien-Abführhauben 7 und 8 an. Die Medien-Zuführhauben 5 und 6 stehen dabei mit zwei getrennten Zuführkanälen 9 und 10 in ständiger Verbindung, während an die Medien-Abführhauben 7 und 8 zwei voneinander getrennte Kanäle 11 und 12 angeschlossen sind.

Dem anderen Ende des stationären Gehäuses 2 ist wiederum eine Medien-Zuführhaube 13 und eine Medien-Abführhaube 14 zugeordnet, wobei sich die erstere an einen Kanal 15 anschließt, während die zweite mit einem Kanal 16 verbunden ist.

Die beiden Medien-Zuführhauben 5 und 6 und die Medien-Abführhaube 14 sind jeweils als ringsektorförmige Drehhauben ausgeführt, die miteinander durch eine Welle 17 in Drehantriebsverbindung stehen. Dabei bestreicht die Zuführhaube 5 jeweils den inneren Speichermassen-Ringbereich 3b der stationären Speichermassen 3, während die Medien-Zuführhaube 6 entlang dem äußeren Speichermassen-Bereich 3a derselben umläuft. Die als Drehhaube an der gegenüberliegenden Seite des stationären Gehäuses 2 angeordnete Medien-Abführhaube 14 ist hingegen so angeordnet und ausgebildet, daß sie gleichzeitig die beiden konzentrisch ineinandersitzenden Speichermassen-Bereiche 3a und 3b der Speichermassen 3 bestreichen kann.

Während die Medien-Abführhaube 7, wie auch die Medien-Zuführhaube 13 insgesamt stationär mit den voneinander abgewendeten Enden des Gehäuses 2 verbunden sind, ist das den stationären Speichermassen 3 im Bereich der konzentrischen Trennwand 4 zugeordnete Teilstücke 8a der Medien-Abführhaube 8 mit den beiden Medien-Zuführhauben 5 und 6 verbunden, so daß es zusammen mit diesen eine Drehbewegung ausführen kann. Unter Vermittlung von sich koaxial übergreifenden Dichtungsschürzen 18a und 18b schließt sich an den drehbaren Abschnitt 8a der Medien-Abführhaube 8 ein stationärer Abschnitt 8b derselben an.

Während die Medien-Zuführhaube 13 die gesamte, nach oben gerichtete, Stirnfläche der Speichermassen 3, also die Speichermassen-Bereiche 3a und 3b umfaßt, ist die Medien-Abführhaube 7 nur der unteren Stirnfläche des Speichermassen-Bereiches 3a zugeordnet, während die Medien-Abführhaube 8 die abwärts gerichtete Stirnfläche des Speichermassen-Bereiches 3b umfaßt. Die Medien-Zuführhauben 5 und 6 und das Teilstück 8a der Medien-Abführhaube 8 sind innerhalb der stationären Medien-Abführhaube 7 drehbeweglich aufgenommen, während die Medien-Abführhaube 14 innerhalb der stationären Medien-Zuführhaube 13 rotiert.

Unter Vermittlung von sich koaxial übergreifenden Dichtungsschürzen 19a und 19b bzw. 20a und 20b schließen sich an die drehbaren Medien-Zuführhauben 5 und 6 die beiden stationären Medien-Zuführkanäle 9 und 10 an, wobei diese konzentrisch ineinander sitzen. Mit Abstand vor den drehbaren Medien-Zuführhauben 6, und zwar jeweils in Strömungsrichtung der zugeführten Medien vor einem Krümmer sind in jeden der Medien-Zuführkanäle 9 und 10 Drossel- und/oder Absperrklappen 21 bzw. 22 eingebaut, die sich unabhängig voneinander betätigen lassen. Durch die Drossel- und/oder Absperrklappen 21 läßt sich dabei der Medien-Zuführkanal 9 wahlweise freigeben und absperren sowie auch in seinem Durchlaßquerschnitt variieren. In entsprechender Weise kann durch die Drossel- und/oder Absperrklappen 22 auch der Medien-Zuführkanal 10 wahlweise abgesperrt oder freigegeben, wie auch in seinem wirksamen Durchlaßquerschnitt variiert werden.

Auch die drehbare Medien-Abführhaube 14 schließt sich unter Vermittlung von sich koaxial übergreifenden Dichtungsschürzen an den stationären Medien-Abführkanal 16 an.

Die mit den beiden Medien-Abführhauben 7 und 8 in Strömungsverbindung stehenden Medien-Abführkanäle 11 und 12 sind stromabwärts von den Medien-Abführhauben 7 und 8 ebenfalls mit Absperr- und/oder Drosselklappen 24 und 25 ausgestattet, mit deren Hilfe sich ihr Durchlaßquerschnitt wahlweise freigeben und absperren läßt, aber darüberhinaus auch in seiner wirksamen Abmessung variiert werden kann.

Stromabwärts der Drossel- und/oder Absperrklappen 24 und 25 münden die beiden Medien-Abführkanäle 11 und 12 in einen gemeinsamen Rauchgaskanal 26 ein, wobei dieser Rauchgaskanal 26 zum Kamin der Feuerungsanlage führen kann.

Es liegt auf der Hand, daß durch die vorste-

hend beschriebene Ausgestaltung des Regenerativ-Wärmetauschers jeweils zwei parallele Ströme sowohl des wärmeübertragenden Mediums als auch des wärmeaufnehmenden Mediums getrennt voneinander durch die Wärmespeichermassen 3, nämlich einerseits durch den Speichermassen-Bereich 3a und andererseits durch den Speichermassen-Bereich 3b geführt werden können. Der durch den Medien-Zuführkanal 9 und die Medien-Zuführhaube 5 geleitete Strom des wärmeübertragenden Mediums beaufschlagt dabei den Speichermassen-Bereich 3b der stationären Speichermassen 3, während der durch den Medien-Zuführkanal 10 und die Medien-Zuführhaube 6 geleitete Strom des wärmeübertragenden Mediums den Speichermassen-Bereich 3a beaufschlagt.

Beide wärmeübertragenden Medienströme werden dann gemeinsam am oberen Ende der stationären Speichermassen 3 von der drehbaren Medien-Abführhaube 14 aufgenommen und von dieser in den Medien-Abführkanal 16 geleitet.

Das andere Medium gelangt durch den Medien-Zuführ-kanal 15 in die stationäre Medien-Zuführhaube 13 zum oberen Ende der Wärmespeichermassen 3 und wird dort durch die konzentrische Trennwand 4 beim Durchtritt durch die Wärmespeichermassen 3 in zwei voneinander getrennte Medienströme aufgeteilt, wobei der eine durch den Speichermassen Bereich 3a und der andere durch den Speichermassen-Bereich 3b geht. Auf dem Weg zum unteren Ende der Speichermassen 3 stehen die beiden voneinander getrennten Medienströme jeweils mit dem Speichermassen-Bereich 3a oder dem Speichermassen-Bereich 3b im Wärmeaustausch, bevor sie dann getrennt voneinander einerseits in den Ringraum der Medien-Abführhaube 7 und andererseits in die Medien-Abführhaube 8 gelangen und von dort in die Medien-Abführkanäle 11 und 12 eintreten.

Mittels der Drossel- und/oder Absperrklappe 21 kann der Strom des wärmeübertragenden Mediums durch den Speichermassen-Bereich 2b wahlweise freigegeben und abgesperrt aber auch in seiner Durchsatzmenge variiert werden. Durch die Drossel- und/oder Absperrklappen 22 läßt sich hingegen der Strom des wärmeübertragenden Mediums durch den Speichermassen-Bereich 3a wahlweise absperren und freigeben sowie auch mengenmäßig drosseln.

Andererseits ist es durch die Betätigung der Absperrklappen 25 möglich, den Durchtritt des wärmeaufnehmenden Mediums durch den Speichermassen-Bereich 3a wahlweise abzusperren und freizugeben sowie auch mengenmäßig zu drosseln. In entsprechender Weise kann durch die Drossel- und/oder Absperrklappen 24 aber auch der Durchtritt des wärmeaufnehmenden Mediums durch den Speichermassen-Bereich 3b wahlweise abgesperrt oder freigegeben sowie auch mengenmäßig gedrosselt werden, obwohl die Stromtrennung des wärmeaufnehmenden Mediums erst innerhalb der Speichermassen 3, nämlich durch die Trennwand 4 zwischen den Speichermassen-Bereichen 3a und 3b stattfindet.

In baulicher Hinsicht es es vorteilhaft, daß die Ströme sowohl des wärmeübertragenden Mediums als auch des wärmeaufnehmenden Mediums lediglich an einer Seite des Regenerativ-Wärmetauschers 1 durch entsprechend ausgestaltete Hauben 5 und 6 bzw. 7 und 8 sowie Kanäle 9 und 10 bzw. 11 und 12 getrennt geführt werden müssen, während an der gegenüberliegenden Seite desselben Gesamtströme sowohl des wärmeübertragenden als auch des wärmeaufnehmenden Mediums vorhanden sind.

Reinigungs- bzw. Waschvorrichtungen 28a und 28b sind an der oberen Seite des Regenerativ-Wärmetauschers 1 so angeordnet und ausgebildet, daß sie die beiden Speichermassen-Bereiche 3a und 3b der Wärmespeichermassen 3 jeweils getrennt mit dem Wasch- bzw. Reinigungsmedium beaufschlagen können, welches die in den Speichermassen gebildeten, unerwünschten Ablagerungen entfernt, die - je nach Anordnung des Regenerativ-Wärmetauschers 1 im System der Gasreinigungsanlage - entweder nur aus Kalverbindungen und Flugstaub oder aber zusätzlich noch aus Ammoniumbisulfat bestehen können.

Die Wasch- und/oder Reinigungsvorrichtungen 28a, 28b sind vorteilhaft außerhalb der drehbaren Medien-Abführhaube 14, aber innerhalb der Medien-Zuführhaube 13 angeordnet, und zwar so, daß sie sich zusammen mit der Medien-Abführhaube 14 innerhalb der Medien-Zuführhaube 13 drehen und dadurch während ihrer Bewegung die gesamte Stirnfläche der Wärmespeichermassen 3 bestreichen. Vorteilhaft ist dabei, daß jeweils im Einbaubereich der Wasch- und/oder Reinigungsvorrichtungen 28a, 28b eine Trennwand bzw. ein Schild 29 vorgesehen ist, welches an die konzentrische Trennwand 4 im Gehäuse 1 anschließt und dadurch die Wirkbereiche der Wasch- und/oder Reinigungsvorrichtungen 28a und 28b gegeneinander abschirmt.

Es wird jeweils immer nur diejenige Wasch- und/oder Reinigungsvorrichtung 28a bzw. 28b in Betrieb gesetzt, welche denjenigen Speichermassen-Bereich 3a bzw. 3b, welcher gerade stillgesetzt ist, also noch von zwei entgegengesetzt zueinander beweglichen Strömen beaufschlagt wird.

Es hat sich gezeigt, daß der vorstehend erläuterte Aufbau eines Regenerativ-Wärmetauschers auch während der Durchführung eines Wasch- bzw. Reinigungsvorgangs in einem der beiden Speichermassen-Bereiche 3a und 3b mit dem jeweils anderen Speichermassen-Bereich 3b bzw. 3a in Betrieb bleiben kann, wobei dieser Speichermassen-Bereich sich ohne weiteres mit 60 bis 65 % der Nennlast beaufschlagen läßt. Die Gasreinigungsanlage braucht also während eines Reinigungsvorgangs nicht auf eine Teillast heruntergefahren zu werden, die nur der halben Nennlast entspricht.

Da sich andererseits jeder einzelne Speichermassen-Bereich 3a und 3b des Regenerativ-Wärmetauschers 1 hinsichtlich seiner Beaufschlagung sowohl mit den wärmeübertragenden als auch mit den wärmeaufnehmenden Medien in weiten Grenzen variieren läßt, kann eine Regelung der Medientemperaturen auf Nennwerte erreicht werden, die unterschiedlichsten Teillast-Betriebsverhältnissen der Feuerungsanlage optimal angepaßt sind.

In jedem möglichen Betriebsfall des Regenerativ-Wärmetauschers ergeben sich rotationssymmetrische Temperaturprofile in den Speichermassen 3 bzw. in den Speichermassen-Bereichen 3a und 3b, so daß auch die richtige Einstellung der Dichtungssysteme zu jeder Zeit sichergestellt wird.

Selbstverständlich wäre es auch im Rahmen der Erfindung möglich, die Speichermassen 3 in mehr als zwei konzentrisch ineinandersitzende Speichermassen-Bereiche, vorzugsweise in drei Speichermassen-Bereiche zu unterteilen und diesen dann zumindest an der heißen Seite eine entsprechende Anzahl von Medien-Zuführ- und Abführhauben zuzuordnen. Die dem mittleren Speichermassen-Bereich zugeordneten Medien-Zuführ- und -Abführhauben lassen sich dabei dann so auslegen, daß mit ihrer Hilfe dieser mittlere Speichermassen-Bereich wahlweise dem inneren oder dem äußeren Speichermassen-Bereich zugeschaltet werden kann. Während jeweils ein Bereich der Speichermassen 3 einem Wasch- bzw. Reinigungsvorgang unterworfen wird, können dann die anderen Speichermassen-Bereiche in Betrieb bleiben, wobei ihre Beaufschlagung dann auch mit mehr als 65 % der Nennlast der betreffenden Gasreinigungsanlage möglich ist. Der Reinigungsvorgang im mittleren- umschaltbaren Speichermassen-Bereich läßt sich in diesem Falle immer dann durchführen, wenn die Großfeuerungsanlage in einem Teillastbetrieb läuft, welcher höchstens 50 % der Nennlast ausmacht.

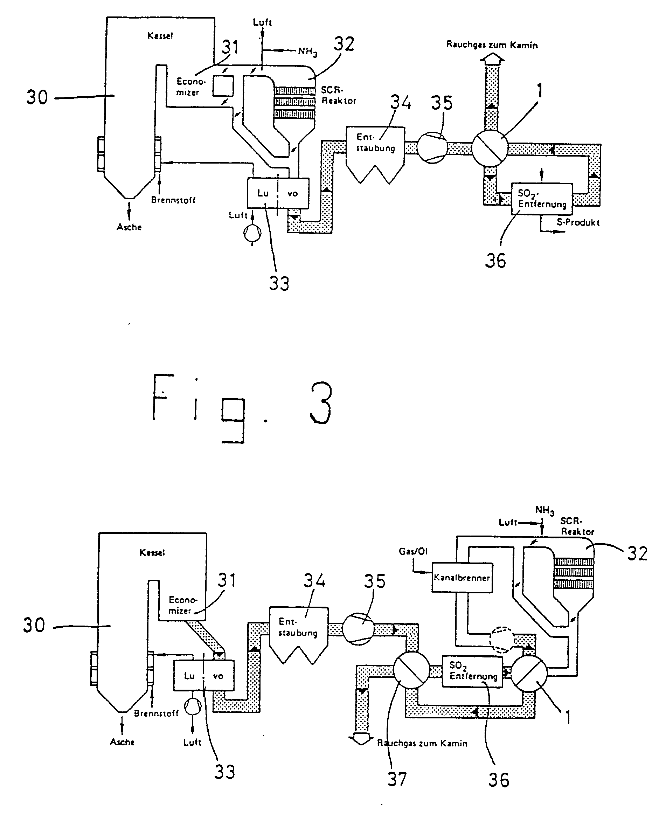

In den Figuren 2 und 3 der Zeichnung sind rein schematisch zwei verschieden aufgebaute Feuerungsanlagen gezeigt, in die jeweils eine erfindungsgemäße Vorrichtung zur Schadgasminderung integriert ist.

In beiden Feuerungsanlagen schließt sich dabei an den Kessel 30 der Economizer 31 an.

Bei der Feuerungsanlage nach Figur 2 ist im Anschluß an den Economizer 31 der sogenannte SCR-Reaktor 32 für die Stickoxid- bzw. NO$_x$-Entfernung aus den Rauchgasen eingebaut. Hieran schließt sich dann der Luftvorwärmer 33 für die Verbrennungsluft des Kessels 30 an. Hinter dem Luftvorwärmer 33 befindet sich die Entstaubungsanlage 34 und ein dieser nachgeschaltetes Rauchgasgebläse 35. Hinter dem Rauchgasgebläse 35 ist bei der Feuerungsanlage nach Figur 2 der erfindungsgemäß ausgelegte und betreibbare Regenerativ-Wärmetauscher 1 eingebaut, wobei dieser einerseits von den Rauchgasen beaufschlagt wird und sie abkühlt, bevor diese zur SO$_2$-Entfernung in die Rauchgasentschwefelungsanlage 36 eintreten. Andererseits wird der Regenerativ-Wärmetauscher 1 aber noch von den aus der Rauchgas-Entschwefelungsanlage 36 austretenden Rauchgasen zur Wiederaufwärmung beaufschlagt.

Die Großfeuerungsanlage nach Figur 3 unterscheidet sich von derjenigen nach Figur 2 einerseits dadurch, daß der SCR-Reaktor 32 für die Stickoxid- bzw. NO$_x$-Minderung hinter der Rauchgas-Entschwefelungsanlage 36 eingebaut ist, während sich dort andererseits auch der erfindungsgemäße Regenerativ-Wärmetauscher 1 hinter der Rauchgas-Entschwefelungsanlage 36 befindet. Der Regenerativ-Wärmetauscher 1 wird dabei einerseits von den aus der Entschwefelungsanlage 36 kommenden Rauchgasen zur Vorwärmung beaufschlagt, die dann in den SCR-Reaktor 32 eintreten.

Andererseits wird dem Regenerativ-Wärmetauscher 1 dort aber das aus dem SCR-Reaktor 32 kommende Rauchgas zur Abkühlung zugeführt, bevor dieses zum Kamin der Feuerungsanlage gelangt.

Bei der Feuerungsanlage nach Figur 3 kann auch vor der Rauchgas-Entschwefelungsanlage 36 noch ein Regenerativ-Wärmetauscher 37 eingebaut werden, der gegebenenfalls die gleiche Ausbildung und Wirkungsweise wie der Regenerativ-Wärmetauscher 1 hat. Dieser Regenerativ-Wärmetauscher 37 wird dabei einerseits von den Rauchgasen beaufschlagt, bevor sie in die Rauchgas-Entschwefelungsanlage 36 eintreten. Andererseits läßt er sich aber mit den Rauchgasen beaufschlagen, die zuvor dem SCR-Reaktor 32 aus den Regenerativ-Wärmetauscher 1 durchströmt haben.

## Patentansprüche

1. Vorrichtung zur Schadgasminderung beim Betrieb von Feuerungsanlagen, bestehend aus naß und/oder trocken arbeitenden Reaktoren (32) und diesen zugeordneten Regenerativ-Wärmetauschern (1), die entweder der Abkühlung und Wiederaufwärmung oder aber der Vorwärmung und Wiederabkühlung des Rauchgasstromes dienen, wobei die Speichermassen (3) des Regenerativ-Wärmetauschers (1) konzentrisch in mindestens zwei Speichermassen-Bereiche (3a und 3b) unterteilt sind (4) und die wärmeübertragenden sowie auch die wärmeaufnehmenden Medien jeweils in zwei getrennten, parallelen Ströme durch diese Speichermassen (3 bzw. 3a und 3b) hindurchführbar sind, und wobei weiterhin entweder die Speichermassen (3 bzw. 3a, 3b) stationär angeordnet sind und zwischen umlaufbeweglichen Medien-Zu-und Abführhauben (5, 6, 7, 8, 13, 14,) und mit diesen verbundenen Medien-Zu-und Ablaufkanälen (9, 10, 11, 12) liegen oder die Speichermassen (3, 3a, 3b) drehbeweglich zwischen stationären Medien-Zu-und Abführhauben mit entsprechenden Medien-Zu-und Ablaufkanälen angeordnet sind, *dadurch gekennzeichnet*, daß jeder Speichermassen-Bereich (3a bzw. 3b) einerseits an eine eigene Medien-Zuführhaube (6 bzw. 5) ringsektorförmig anschließt und andererseits beiden Speichermassen-Bereichen (3a und 3b) gemeinsam eine Medien-Abführhaube (14) ebenfalls ringsektorförmig zugeordnet ist, die den Medien-Zuführhauben (6 und 5) gegenüberliegt, daß weiterhin dem Speichermassen-Bereich (3a) benachbart der Medien-Zuführhaube (6) eine Medien-Abführhaube (7) sowie dem Speichermassen-Bereich (3b) benachbart der Medien-Zuführhaube (5) eine Medien-Abführhaube (8) zugeordnet ist, von denen jede die jeweils von den Medien-Zuführhauben (6 bzw. 5) freigelassenen Teile des Speichermassen-Bereiches (3a bzw. 3b) abdeckt, daß darüber hinaus die Medien-Abführhaube (14) von einer Medien-Zuführhaube (13) umfangen ist, die den jeweils von der Medien-Zuführhaube (14) freigelassenen Teil beider Speichermassen-Bereiche (3a und 3b) abdeckt, und daß dabei vermittels der Medien-Zuführhauben (6 und 5) und/oder der Medien-Abführhauben (7 und 8) jeder der beiden parallelen Ströme sowohl des wärmeübertragenden Mediums als auch des wärmeaufnehmenden Mediums für sich allein wahlweise entweder dem zugeordneten Teil (3a bzw. 3b) der Speichermasse (3) zuführbar (6, 5 bzw. 13) ist oder daß die Medien-Zu-und Abführkanäle (9, 10, 11, 12) für sich allein wahlweise absperrbar sind (Klappen 21, 22, 24, 25).

2. Vorrichtung nach Anspruch 1, *dadurch gekennzeichnet,* daß jeweils lediglich der gegen Medienzufuhr abgesperrte Teil (3a bzw. 3b) der Speichermassen (3) einem nassen oder thermischen Reinigungsvorgang unterwerfbar ist.

3. Vorrichtung nach einem der Ansprüche 1 und 2, *dadurch gekennzeichnet,* daß die Ströme sowohl des wärmeübertragenden Mediums als auch des wärmeaufnehmenden Mediums wenigstens jeweils an einer Seite des Regenerativ-Wärmetauschers (1) auch außerhalb der Speichermassen (3) getrennt parallel geführt sind (5, 6, 9, 10 und 7, 8, 11, 12).

4. Vorrichtung nach einem der Ansprüche 1 bis 3, *dadurch gekennzeichnet,* daß sämtliche außerhalb der Speichermassen (3; 3a, 3b) befindlichen Stromtrennungen (5, 6, 9, 10 und 7, 8, 11, 12) für beide Medien an der gleichen Seite des Regenerativ-Wärmetauschers (1) angeordnet sind.

5. Vorrichtung nach einem der Ansprüche 1 bis 4, *dadurch gekennzeichnet,* daß die Stromtrennungen aus Kanälen (9, 10 und 11, 12) und/oder Hauben (5, 6 und 7, 8) bestehen, in denen jeweils mit Abstand von der Speichermasse (3; 3a, 3b) Drossel- und/oder Absperrklappen (21, 22 und 24, 25) sitzen, die unabhängig voneinander betätigbar, nämlich öffen- und schließbar sowie zur Regelung des Durchlaßquerschnitts stufenlos verstellbar, sind.

6. Vorrichtung nach einem der Ansprüche 1 bis 5, *dadurch gekennzeichnet,* daß die Reinigungsvorrichtungen (28a, 28b) der oberen Seite der Speichermassen (3; 3a, 3b) im vertikal angeordneten Regenerativ-Wärmetauscher (1) zugeordnet sind (Fig. 1).

7. Vorrichtung nach einem der Ansprüche 1 bis 6, *dadurch gekennzeichnet,* daß die Stromtrennungen (5, 6, 9, 10 und 7, 8, 11, 12) für die Medienströme der Seite des Regenerativ-Wärmetauschers (1) zugeordnet sind, die nicht durch Korrosionen oder hohe Temperaturen belastet ist (Fig. 1).

8. Vorrichtung nach einem der Ansprüche 1 bis 7, *dadurch gekennzeichnet,* daß die Drossel- und/oder Absperrklappen (21, 22) in den Strömungswegen (9, 10) für das eine Medium stromaufwärts vom Regenerativ-Wärmetauscher (1) angeordnet sind, während die Drossel- und/oder Absperrklappen (24, 25) in den Strömungswegen (11, 12) für das andere Medium stromabwärts des Regenerativ-Wärmetauschers (1) liegen (Fig. 1).

## Claims

1. Device for reducing noxious gases during the operation of combustion plants, consisting of reactors (32) operating on a wet or dry basis and their associated regenerative heat exchangers (1) which are used either for cooling and reheating, or else for preheating and recooling, the flue gas stream, in which the storage masses (3) of the regenerative heat exchanger (1) are subdivided (4) concentrically into at least two storage mass regions (3a and 3b) and the heat-transmitting and heat-absorbing media can each be passed in two separate, parallel streams through these storage masses (3, or 3a and 3b), and in which in addition either the storage masses (3, or 3a, 3b) are stationary and lie between rotatable media supply and discharge hoods (5, 6, 7, 8, 13, 14) and their connected media supply and discharge ducts (9, 10, 11, 12), or the storage masses (3, 3a, 3b) are located so that they can rotate between stationary media supply and discharge hoods with corresponding media supply and discharge ducts, characterized in that each storage mass region (3a and 3b) has on one side a connection in the shape of an annular sector to its own media supply hood (6 or 5) and on the other side a media discharge hood (14), also of annular sector shape, is allocated jointly to both storage mass regions (3a and 3b) and lies opposite the media supply hoods (6 and 5), in that furthermore a media discharge hood (7) is allocated to the storage mass region (3a) adjacent to the media supply hood (6) and a media discharge hood (8) is allocated to the storage mass region (3b) adjacent to the media supply hood (5) and each of which said media discharge hoods cover the sections of the storage mass regions (3a and 3b) not covered at any time by the media supply hoods (6 and 5), in that in addition the media discharge hood (14) is surrounded by a media supply hood (13) which covers the sections of both storage mass regions (3a and 3b) which at any time are not covered by the media supply hood (14), and in that at the same time by means of media supply hoods (6 and 5) and/or the media discharge hoods (7 and 8) each of the two parallel streams both of the heat transmitting medium and of the heat absorbing medium can be supplied (6, 5 or 13) as required individually to the associated sections (3a or 3b) of the storage mass (3) or in that the media supply and discharge ducts (9, 10, 11, 12) can be shut off individually as required (flaps 21, 22, 24, 25).

2. Device according to Claim 1, characterized in that at any time only the section (3a or 3b) of the storage masses (3) which is closed against the supply of medium can be submitted to a wet or thermal cleaning process.

3. Device according to one of Claims 1 and 2, characterized in that the streams both of the heat transmitting medium and of the heat absorbing medium are also guided, in each case on at least one side of the regenerative heat exchanger (1), separately and parallel (5, 6, 9, 10 and 7, 8, 11, 12) externally to the storage masses (3).

4. Device according to one of Claims 1 to 3, characterized in that all flow separations (5, 6, 9, 10 and 7, 8, 11, 12) external to the storage masses (3; 3a, 3b) for both media are located on the same side of the regenerative heat exchanger (1).

5. Device according to one of Claims 1 to 4, characterized in that the flow separations consist of ducts (9, 10 and 11, 12) and/or hoods (5, 6 and 7, 8) in which are positioned, in each case at a distance from the storage masses (3; 3a, 3b), regulating or shut-off flaps (21, 22 and 24, 25) with can be actuated independently of one another, namely can be opened and closed and adjusted infinitely variably for controlling the open area.

6. Device according to one of Claims 1 to 5, characterized in that the cleaning devices (28a, 28b) are assigned to the upper side of the storage masses (3; 3a, 3b) in the vertically-positioned regenerative heat exchanger (1) (Fig. 1).

7. Device according to one of Claims 1 to 6, characterized in that the flow separations (5, 6, 9, 10 and 7, 8, 11, 12) for the media streams are assigned to the side of the regenerative heat exchanger (1) which is not subjected to corrosion or high temperatures (Fig. 1).

8. Device according to one of Claims 1 to 7, characterized in that the regulating and/or shut-off flaps (21, 22) are positioned in the flow paths (9, 10) for one medium upstream of the regenerative heat exchanger (1), while the regulating and/or shut-off flaps (24, 25) lie in the flow paths (11, 12) for the other medium downstream of the regenerative heat exchanger (1) (Fig. 1).

**Revendications**

1. Dispositif permettant de réduire la quantité de gaz nocifs produits au cours du fonctionnement des installations de chauffage et constitué par des réacteurs (32) fonctionnement par voie humide et/ou par voie sèche et par des échangeurs de chaleur (1) à récupération qui leur sont associés et qui servent au refroidissement et au réchauffage ou encore au préchauffage et à un refroidissement ultérieur du courant de fumées, les masses d'accumulation (3) de l'échangeur de chaleur (1) à récupération étant subdivisées concentriquement en au moins deux zones (3a et 3b) de masses d'accumulation et les milieux caloporteurs ainsi que les milieux absorbant la chaleur pouvant être guidés de manière à traverser ces masses d'accumulation (3 ou 3a et 3b) en deux courants séparés parallèles, le dispositif comportant soit des masses d'accumulation (3 ou 3a et 3b) placées à poste fixe entre des hottes tournantes (5, 6, 7, 8, 13, 14) assurant l'amenée et l'évacuation des milieux et des conduits tournants (9, 10, 11, 12) assurant l'amenée et l'évacuation des milieux, soit des masses d'accumulation (3, 3a, 3b) tournant entre des hottes fixes assurant l'amenée et l'évacuation des milieux comportant des conduits correspondants assurant l'amenée et l'évacuation des milieux, caractérisé en ce que chaque zone (3a ou 3b) de masses d'accumulation se raccorde, d'une part, suivant un secteur annulaire, à une hotte (6 ou 5) d'amenée des milieux qui lui est propre et que, d'autre part, les deux zones (3a et 3b), de masses d'accumulation sont associées, également suivant des secteurs annulaires, à une même hotte (14) qui assure l'évacuation des milieux et, qui est placé en face des hottes (6 et 5) assurant l'amenée des milieux, en ce qu'à la zone (3a) de masses d'accumulation est associée, à proximité de la hotte (6) assurant l'amenée des milieux, une hotte (7) d'évacuation des milieux de même qu'à la zone (3b) des masses d'accumulation est associée à proximité de la hotte (5) assurant l'amenée des milieux, une hotte (8) assurant l'évacuation des milieux, chacune de ces deux hottes recouvrant les parties des zones (3a ou 3b) des masses d'accumulation qui sont laissées libres par les hottes (6 ou 5) assurant l'amenée des milieux, en ce que la hotte (14) qui assure l'évacuation des milieux est entourée par une hotte (13) qui assure l'amenée des milieux et qui recouvre la partie des deux zones (3a et 3b) des masses d'accumulation qui sont laissées libres par la hotte (14) assurant l'amenée des milieux et en ce que les hottes (6 ou 5) assurant l'amenée des milieux et/ou les hottes (7 et 8) assurant l'évacuation des milieux permettent, au choix de diriger chacun des deux courants parallèles, celui du milieu caloporteur comme celui du milieu absorbant la chaleur, pour les envoyer individuellement (6, 5 ou 13) à la partie correspondante (3a ou 3b) de la masse d'accumulation (3) ou de fermer individuellement les conduits (9, 10, 11, 12) assurant l'amenée et l'évacuation des milieux (clapets 21, 22, 24, 25).

15

2. Dispositif selon la revendication 1, caractérisé en ce que seule la partie (3a ou 3b) des masses d'accumulation (3) qui est isolée de la partie assurant l'amenée des milieux peut être soumise à une épuration par voie humide ou par la chaleur.

3. Dispositif selon une des revendications 1 ou 2, caractérisé en ce que les courants, aussi bien celui du milieu caloporteur que celui du milieu absorbant la chaleur, sont, au moins d'un côté de l'échangeur de chaleur (1) à récupération, guidés également à l'extérieur des masses d'accumulation (3), de manière à être séparés et parallèles (5, 6, 9, 10 et 7, 8, 11, 12).

4. Dispositif selon une des revendications 1 à 3, caractérisé en ce que tous les dispositifs de séparation de courants (5, 6, 9, 10 et 7, 8, 11, 12) qui se trouvent à l'extérieur des masses d'accumulation (3, 3a, 3b) pour les deux milieux sont placés du même côté de l'échangeur de chaleur (1) à récupération.

5. Dispositif selon une des revendications 1 à 4, caractérisé en ce que les dispositifs de séparation des courants sont constitués par des conduits (9, 10 et 11, 12) et/ou des hottes (5, 6 et 7, 8) dans lesquels sont montés, à une certaine distance des masses d'accumulation (3, 3a, 3b) des clapets d'étranglement et/ou de fermeture (21, 22 et 24, 25) qui peuvent être manoeuvrés indépendamment les uns des autres, notamment pour être ouverts, fermés ou déplacés d'une manière continue pour le réglage de la section de passage.

6. Dispositif selon une des revendications 1 à 5, caractérisé en ce que les installations d'épuration (28a, 28b) de la partie supérieure des masses d'accumulation (3, 3a, 3b) sont placées dans des échangeurs de chaleur (1) à récupération disposés verticalement (Figure 1).

7. Dispositif selon une des revendications 1 à 6, caractérisé en ce que les dispositifs de séparation (5, 6, 9, 10 et 7, 8, 11, 12) des courants de milieux sont disposés du côté de l'échangeur de chaleur (1) à récupération qui n'est pas exposé à des risques de corrosion ou à des températures élevées (Figure 1).

8. Dispositif selon une des revendications 1 à 7, caractérisé en ce que les clapets d'étrangement et/ou de fermeture (21, 22) montée que les trajets (9, 10) du courant de l'un des milieux sont placés en amont de l'échangeur de chaleur (1) à récupération tandis que les clapets d'étranglement et/ou de fermeture (24, 25) montés sur les trajets (11, 12) de l'autre milieu sont placés en aval de l'échangeur de chaleur (1) à récupération (Figure 1).

Fig. 3